# EUROPEAN PATENT APPLICATION

(11) **EP 2 573 123 A1**
(43) Date of publication of application: **27.03.2013**
(21) Application number: 10851751.7
(22) Date of filing: 19.05.2010
(51) Int. Cl.: C08G 8/34, C09D 11/10

(54) **ROSIN-MODIFIED PHENOL RESIN, PROCESS FOR PRODUCTION THEREOF, VARNISH FOR PRINTING INK, AND PRINTING INK**

(71) Applicant: Arakawa Chemical Industries, Ltd., Osaka-shi Osaka 541-0046 (JP)
(72) Inventor: KAWASE,Shigeru, Osaka-shi Osaka 538-0053 (JP); HAKATA,Hirokazu, Osaka-shi Osaka 538-0053 (JP)
(74) Representative: HOFFMANN EITLE
(86) International application number: PCT/JP2010/058442
(87) International publication number: WO 2011/145187

(57) **Abstract**

A rosin-modified phenolic resin, which consists of a reaction product among (a) a rosin that contains a component derived from communic acid in an amount of 0.1 to 0.8wt%, (b) a condensation product of a phenol and formaldehyde, and (c) a polyol. The rosin-modified phenol resin makes it possible to produce a printing ink which has a good balance among ink performances such as fluidity, emulsification resistance, misting resistance, drying properties, and gloss.

## Description

### TECHNICAL FIELD

The invention relates to a rosin-modified phenolic resin, a method for production thereof, a varnish for printing ink, and a printing ink.

### BACKGROUND ART

In the field of offset printing, printing machines have become faster due to an increase in profitability or a reduction in time for delivery of prints, which however causes a problem such as imparing of working places due to a large amount of ink misting from printing machines. Therefore, there have been generally used methods of imparting electrical conductivity to ink resin by making it highly polar, methods of increasing the elasticity of ink by increasing the molecular weight of the ink, and so on. Unfortunately, such methods tend to reduce the gloss of prints, whereas they can reduce the amount of mist.

A proposed method for reducing ink mist and improving gloss includes using a petroleum resin composition with a specific high softening point for ink (see Patent Document 1). Unfortunately, it is difficult for such a composition to provide a variety of satisfactory ink performance properties including resistance of ink to emulsification, drying properties of ink films, etc.

It is also proposed that a rosin-modified phenolic resin having a weight average molecular weight of 30, 000 to 250, 000, which comprises a polyol component and a resol-type resin component produced with a C₁₀-C₂₀ alkyl phenol, should be used as means for reducing ink mist and improving gloss and drying properties (see Patent Document 2). Unfortunately, it is also difficult for such a resin to provide satisfactory ink performance properties, and such a resin is also less versatile.

The inventors are also proposed a method for reducing misting while maintaining the performance properties (such as gloss, drying properties, and emulsification resistance) of printing ink, which includes reducing the content of low-molecular-weight components in a rosin-modified phenolic resin (see Patent Document 3). Unfortunately, a further improvement in the fluidity of printing ink has been demanded.

Also, it has been recognized that rosin-modified phenolic resin usually has a problem such as an excessive increase in melt viscosity during production, which makes stirring difficult, when high-molecular-weight rosin-modified phenolic resin is produced to meet the requirements for an increase in printing speed.

### PRIOR ART DOCUMENTS

### Patent Documents

Patent Document 1: JP-A No. 07-33951
Patent Document 2: JP-A No. 08-283641
Patent Document 3: JP-A No. 2007-238795

### SUMMARY OF THE INVENTION

### Objects to be Achieved by the Invention

A principal object of the invention is to provide a rosin-modified phenolic resin that does not cause an excessive increase in melt viscosity during production and makes it possible to produce a printing ink with good ink performance properties such as good fluidity, emulsification resistance, misting resistance, drying properties, and gloss. Another object of the invention is to provide a method for producing such a rosin-modified phenolic resin, a varnish for printing ink containing such a rosin-modified phenolic resin, and a printing ink containing such a varnish for printing ink.

### MEANS FOR SOLVING THE PROBLEMS

To solve the problems, the inventors have made a study focusing on resin acid components, which are reactive components for forming rosin-modified phenolic resin, in rosin materials. As a result, the inventors have accomplished the invention based on the finding that the problems can be solved using a rosin material having a communic acid-derived component content in a specific range.

That is, the invention is related to a rosin-modified phenolic resin, comprising a reaction product of (a) a rosin material containing 0.1 to 8% by weight of a communic acid-derived component, (b) a condensate of a phenolic compound and formaldehyde, and (c) a polyol.
And also, the invention is related to a method for producing a rosin-modified phenolic resin, comprising (a) a rosin material containing 0.1 to 8% by weight of a communic acid-derived component, (b) a condensate of a phenolic compound and formaldehyde, and (c) a polyol.
And further, the invention is related to a varnish for printing ink, comprising the rosin-modified phenolic resin and a vegetable oil and/or a petroleum solvent, a varnish for printing ink, comprising the rosin-modified phenolic resin obtained by the method and a vegetable oil and/or a petroleum solvent, and a printing ink composition comprising the rosin-modified phenolic resin.

### EFFECT OF THE INVENTION

The rosin-modified phenolic resin of the invention does not cause an excessive increase in melt viscosity during production and therefore can be produced with high productivity. The use of the rosin-modified phenolic resin also makes it possible to obtain printing inks with well-balanced ink performance properties including fluidity, emulsification resistance, misting resistance, drying properties, and gloss. Therefore, the rosin-modified phenolic resin is particularly suitable for use in offset inks with which a dampening solution is used, such as sheet-fed offset inks (sheet-fed inks), rotary offset inks (offset rotary inks), and newspaper inks. The rosin-modified phenolic resin is also suitable for use as a binder resin for letterpress inks and gravure printing inks.

### MODE FOR CARRYING OUT THE INVENTION

The rosin-modified phenolic resin of the invention includes a product of the reaction of (a) a rosin material containing 0.1 to 8% by weight of a communic acid-derived component (hereinafter referred to as the component (a)), (b) a condensate of a phenolic compound and formaldehyde (hereinafter referred to as the component (b)), and (c) a polyol (hereinafter referred to as the component (C)).

In the invention, the content of the communic acid-derived component in the component (a) is from 0.1 to 8% by weight. The use of the component (a) prevents an excessive increase in melt viscosity in the process of producing the rosin-modified phenolic resin. In addition, it provides well-balanced performance properties for printing ink. In particular, the resulting printing ink can have good fluidity and misting resistance, which would otherwise have a trade-off relationship usually, and also have good drying properties. On the other hand, if the content is more than 8% by weight, degradation of the balance between ink performance properties can occur, such as a reduction in the emulsification resistance of printing ink or a reduction in ink film gloss. From these points of view, the content of communic acid in the component (a) is preferably from 1 to 5% by weight. In the component (a), the weight of the communic acid-derived component may include not only the weight of communic acid itself (which may be any of part of natural rosin and an extract of natural rosin) but also the weight of communic acid used as a raw material for a derivative of natural rosin as described below. The content (% by weight) of the communic acid-derived component in the component (a) can be calculated based on the total weight of these materials.

As used herein, the term "communic acid" is intended to include isomers such as cis-communic acid, trans-communic acid, and mirceo-communic acid. An example of its structure is shown below.

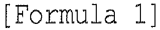

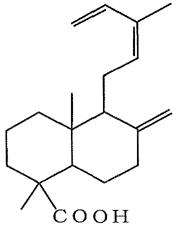

Examples of the rosin material generally include natural rosin such as gum rosin, tall oil rosin, or wood rosin; polymerized rosin obtained by polymerization of the natural rosin; and natural rosin derivatives such as α,β-unsaturated carboxylic acrid-modified rosin produced by the Diels-Alder reaction of the natural rosin with an α,β-unsaturated carboxylic acid.

Examples of the α,β-unsaturated carboxylic acid include α,β-unsaturated dicarboxylic acids such as maleic acid, maleic anhydride, and fumaric acid; and α,β-unsaturated monocarboxylic acids such as acrylic acid and methacrylic acid, and the α,β-unsaturated carboxylic acid is generally used in an amount of 1 to 30 parts by weight based on 100 parts by weight of natural rosin.

The method for obtaining the component (a) is not restricted. For example, [1] the component (a) can be obtained by mixing a communic acid-free rosin material, which belongs to the above rosin materials (natural rosin and derivatives thereof), with communic acid obtained separately. Communic acid can be isolated from natural rosin originally containing communic acid or a derivative thereof by any of various known methods, such as silica gel column chromatography (see for example J. Am. Chem. Soc., 77, 2823 (1955)).

[2] A rosin material originally containing communic acid, which also belongs to the above rosin materials (natural rosin and derivatives thereof), may also be used, without modification, as the component (a). The content of communic acid in the rosin material originally containing it may be generally from about 1 to about 5% by weight, specifically from about 1 to about 3% by weight.

The content of communic acid in the rosin material originally containing it can be measured by any of various known methods. For example, when the rosin material is natural rosin, the communic acid content can be determined by means of gas chromatography (GC) by calculating the ratio (%) of the communic acid peak area to the total resin acid peak area (100%). When the rosin material is a derivative of natural rosin, the communic acid content can be determined by means of gas chromatography (GC) by absolute calibration curve method, taking into account that the material is a high-molecular-weight material.

[3] The component (a) may also be obtained by mixing a rosin material originally containing communic acid (natural rosin or a derivative thereof) with communic acid obtained separately.

[4] The component (a) may also be obtained by mixing a rosin material originally containing communic acid (natural rosin or a derivative thereof) with a communic acid-free rosin material.

The component (a) is preferably a combination of a communic acid-free rosin material and communic acid, as shown in the article [1].

Particularly in view of drying properties of ink films, the component (a) preferably contains α,β-unsaturated carboxylic acid-modified rosin. The method of producing the α,β-unsaturated carboxylic acid-modified rosin is not restricted. Examples of the method include a method of producing it by the Diels-Alder reaction of an α,β-unsaturated carboxylic acid with natural rosin originally containing communic acid; and a method of producing it by the Diels-Alder reaction of an α,β-unsaturated carboxylic acid with a combination of communic acid and natural rosin free of communic acid.

Any of various known resol-type phenolic resins and various known novolac-type phenolic resins may be used as the component (b) without restriction. The resol-type phenolic resins include condensates produced by the addition-condensation reaction of a phenolic compound (P) with formaldehyde (F) in an F/P ratio (molar ratio) generally in the range of about 1 to about 3 in the presence of a basic catalyst. The novolac-type phenolic resins include condensates produced by the addition-condensation reaction of a phenolic compound (P) with formaldehyde (F) in an F/P ratio generally in the range of about 0.5 to about 2 in the presence of any of various acid catalysts. Each condensate may also be a product neutralized and washed with water. Each condensate may also be produced in the presence of water or an organic solvent (such as xylene). A resol-type phenolic resin is preferably used as the component (b), because the use of it can increase the molecular weight of the rosin-modified phenolic resin.

Examples of the phenolic compound include carbolic acid, cresol, amylphenol, bisphenol A, butylphenol, octylphenol, nonylphenol, dodecylphenol, etc. Formalin, paraformaldehyde or the like may be used as the formaldehyde. Examples of the basic catalyst include an organic amine, magnesium hydroxide, calcium hydroxide, calcium acetate, magnesium acetate, zinc acetate, etc. Examples of the acid catalyst include hydrochloric acid, sulfuric acid, oxalic acid, methanesulfonic acid, p-toluenesulfonic acid, dodecylbenzenesulfonic acid, etc. These may be used alone or in combination of two or more.

The component (c) to be used may be any known compound having at least two hydroxyl groups per molecule. Examples of the component (c) include diols such as ethylene glycol, diethylene glycol, triethylene glycol, and neopentyl glycol; triols such as glycerin, trimethylolethane, and trimethylolpropane; tetraols such as pentaerythritol, diglycerin, and ditrimethylolpropane; and polyols with five or more hydroxyl groups, such as dipentaerythritol, which may be used alone or in combination of two or more. In particular, the component (c) is preferably a triol and/or a tetraol, because the physical properties (such as the softening point and the weight average molecular weight) of the rosin-modified phenolic resin can be easily controlled using any of them.

The amounts (on a basis of solid content) of the components (a), (b), and (c) used are not restricted. In view of the balance between the performance properties of printing ink, when the total amount of all components used is normalized as 100% by weight, the amount of the component (a) is generally from about 41 to about 88% by weight, preferably from about 46 to about 74% by weight, the amount of the component (b) is generally from about 9 to about 50% by weight, preferably from about 22 to about 46% by weight, and the amount of the component (c) is generally from about 3 to about 9% by weight, preferably from about 4 to about 8% by weight.

In order to allow the rosin-modified phenolic resin of the invention to have the weight average molecular weight shown below and to make it easy to impart an appropriate level of emulsification resistance to printing ink, the components (a) and (c) are preferably used in such amounts that the ratio (OH/COOH) of the total hydroxyl equivalent (OH) of the component (c) to the total carboxyl equivalent (COOH) of the component (a) falls within the range of about 0.5 to about 1.5.

The weight average molecular weight (which means the polystyrene equivalent value determined by gel permeation chromatography; hereinafter the same applies) of the rosin-modified phenolic resin of the invention is generally, but not limited to, about 3, 000 to about 400, 000. In view of the balance between the performance properties of printing ink (specifically, to provide both good fluidity and misting resistance for printing ink) or in order to make it easy to remove, from a reaction vessel, a varnish for printing ink prepared using the rosin-modified phenolic resin of the invention, the weight average molecular weight is preferably from about 50,000 to about 300,000, more preferably from about 80,000 to about 300,000, even more preferably from 100,000 to 300,000.

The softening point (JIS K 5601) of the resin is generally, but not limited to, about 120 to about 200°C, preferably 140 to 200°C. The rosin-modified phenolic resin with such a softening point has good solubility in the printing ink solvents shown below (vegetable oil and petroleum solvents) and can form a stable varnish for printing ink.

The acid value (JIS K 5601) of the resin is generally, but not limited to, about 5 to about 35 mgKOH/g, preferably 10 to 30 mgKOH/g. The rosin-modified phenolic resin with such an acid value can form a printing ink with good resistance to emulsification.

A method for producing the rosin-modified phenolic resin according to the invention includes allowing the components (a), (b), and (c) to react. The order in which each component is allowed to react is not restricted. Examples include a method of allowing the components (a) to (c) to react simultaneously, a method of allowing the component (c) to react with the product of a reaction between the components (a) and (b), and a method of allowing the component (b) to react with the product of a reaction between the components (a) and (c). The reaction temperature is generally from about 100 to about 300°C, and the reaction time period is generally from about 1 to about 24 hours. The acid catalyst or the basic catalyst used in the production of the component (b) may also be used in the reaction.

The varnish for printing ink of the invention contains the rosin-modified phenolic resin of the invention and a printing ink solvent including vegetable oil and/or petroleum solvent.

Vegetable oil materials include vegetable oils and derivatives thereof (such as vegetable oil esters). Examples include vegetable oils such as linseed oil, tung oil, safflower oil, dehydrated castor oil, and soybean oil; and monoesters of vegetable oils, such as linseed oil fatty acid methyl ester, soybean oil fatty acid methyl ester, linseed oil fatty acid ethyl ester, soybean oil fatty acid ethyl ester, linseed oil fatty acid propyl ester, soybean oil fatty acid propyl ester, linseed oil fatty acid butyl ester, and soybean oil fatty acid butyl ester, which may be used alone or in combination of two or more. The use of vegetable oil materials is particularly preferred in view of environment countermeasure.

Examples of the petroleum solvent include petroleum solvents manufactured by Nippon Oil Corporation, such as No. 0 Solvent, No. 4 Solvent, No. 5 Solvent, No. 6 Solvent, No. 7 Solvent, AF Solvent No. 4, AF Solvent No. 5, AF Solvent No. 6, and AF Solvent No. 7, which may be used alone or in combination of two or more. Petroleum solvents are preferably used so that printed materials with good drying properties can be produced. Among these solvents, solvents with a boiling point of 200°C or more and an aromatic hydrocarbon content of 1% by weight or less are particularly preferred in view of environment countermeasure.

Any of various known gelling agents may be used in the process of producing the varnish for printing ink. Examples include aluminum-based gelling agents such as aluminum octoate, aluminum stearate, aluminum triisopropoxide, aluminum tributoxide, aluminum dipropoxide monoacetylacetate, aluminum dibutoxide monoacetylacetate, and aluminum triacetylacetate, which may be used alone or in combination of two or more.

For example, the method of producing the varnish for printing ink may be a method of allowing the rosin-modified phenolic resin of the invention and the gelling agent to react in the vegetable oil material and/or the petroleum solvent generally at a temperature of about 100 to 240°C. In the reaction, an additives such as an antioxidant may be used.

The printing ink of the invention is produced using the varnish for printing ink. Specifically, the printing ink of the invention is prepared by milling the ink varnish and a pigment or pigments (such as yellow, rouge, cyan, and black pigments), and optionally the vegetable oil material and the petroleum solvent for ink, and additives such as a surfactant and wax using an ink manufacturing apparatus such as a roll mill, a ball mill, an attritor, or a sand mill so that the proper ink constant can be achieved.

### EXAMPLES

Hereinafter, the invention is more specifically described with reference to Production Examples and Examples, which however are not intended to limit the invention.

The term "parts" means parts by weight. The "communic acid content" is the value determined by using a commercially available gas chromatography system (GC-14A, manufactured by Shimadzu Corporation). The "33% by weight linseed oil viscosity" refers to the viscosity of a product obtained by heating and mixing the rosin-modified phenolic resin and linseed oil in a weight ratio of 1:2, as measured at 25°C using a cone and plate viscometer manufactured by Nippon Rheology Equipment Inc. The "weight average molecular weight" is the polystyrene equivalent value measured using a commercially available gel permeation chromatography system (HLC-8120GPC manufactured by Tosoh Corporation), a commercially available column (TSK-GEL column manufactured by Tosoh Corporation), and tetrahydrofuran as an eluent.

### Preparation Example 1 (Isolation of Communic Acid)

A glass funnel with a cock was lined with absorbent cotton and sea sand and then charged with Silica Gel 60 (manufactured by Wako Pure Chemical Industries, Ltd.) moistened with isooctane. The eluent used was isooctane. Subsequently, 1,000 parts of gum rosin (manufactured by Sino Legend Chemical Co., Ltd., Wu Yi, Guangxi, China) containing communic acid was dissolved in 2,768 parts of isooctane to form a gum rosin solution, and the solution was injected into the upper part of the silica gel. The eluate was fractionated into test tubes, and only communic acid-containing fractions were collected into a single solution. The resulting solution was concentrated using an evaporator and then diluted again with isooctane. A 3 mol/L sodium hydroxide aqueous solution was added dropwise to the dilution with stirring. Subsequently, after the precipitated sodium salt was separated by filtration and dried, the dried product was dissolved in diethyl ether to form a solution, to which a 1 mol/L phosphoric acid aqueous solution was added dropwise until the solution became neutral. Subsequently, the resulting solution was concentrated using an evaporator, so that liquid communic acid was obtained. The necessary amount of communic acid was prepared in each of the examples described below.

### Production Example 1 (Production of Component (b))

To a reaction vessel equipped with a stirrer, a reflux condenser having a water separator, and a thermometer were added 1,000 parts of p-tert-butylphenol, 543 parts of 92% paraformaldehyde, 661 parts of xylene, and 500 parts of water and heated to 50°C under stirring. Subsequently, 89 parts of a 45% sodium hydroxide aqueous solution was added to the reaction vessel, and the reaction system was gradually heated to 90°C. The temperature was then maintained for 2 hours, and sulfuric acid was added dropwise thereto so that the pH was adjusted to about 6. Subsequently, the water layer fraction containing formaldehyde and so on was removed, and after washing with water was performed again, the contents were cooled, so that a xylene solution of 70% by weight of resol-type butylphenol resin was obtained.

### Example 1

To a reaction vessel equipped with a stirrer, a reflux condenser having a water separator, and a thermometer was added 950 parts of gum rosin (manufactured by Sino Legend Chemical Co., Ltd., Wu Yi, Guangxi, China) containing 2. 1% by weight of communic acid and melted by heating to 180°C with stirring under a nitrogen atmosphere. Subsequently, 30 parts of maleic anhydride was added to the vessel, and the reaction system was heated to 240°C. Subsequently, 50 parts of communic acid obtained by the method of Preparation Example 1 was added to the vessel, so that a component (a) was obtained. The content of communic acid in the component (a) was about 6.7% by weight. Subsequently, 714 parts (500 parts in solid content) of the resol-type butylphenol resin solution of Production Example 1 was added dropwise to the system over 6 hours. After the dropwise addition was completed, 93 parts of glycerin and 1.0 part of p-toluenesulfonic acid were added, and the mixture was allowed to react within the temperature range of 240 to 280°C until the acid value reached 25 mgKOH/g. After the reaction was completed, the product was adjusted to have a 33% by weight linseed oil viscosity of 20 Pa·s and then placed under a reduced pressure of 0.02 MPa for 10 minutes, so that rosin-modified phenolic resin A was obtained. Its physical properties are shown in Table 1.

### Example 2

To the same reaction vessel as in Example 1 were added 970 parts of communic acid-free gum rosin (manufactured by Guangxi Arakawa Chemical Industries Ltd.) and 30 parts of communic acid obtained by the method of Preparation Example 1 and melted by heating to 180°C with stirring under a nitrogen atmosphere. Subsequently, 30 parts of maleic anhydride was added to the vessel, and the reaction system was heated to 240°C, so that a component (a) was obtained. The content of communic acid in the component (a) was about 2.9% by weight. Subsequently, 714 parts (500 parts in solid content) of the resol-type butylphenol resin solution of Production Example 1 was added dropwise to the system over 6 hours. After the dropwise addition was completed, 93 parts of glycerin and 1.0 part of p-toluenesulfonic acid were added, and the mixture was allowed to react within the temperature range of 240 to 280°C until the acid value reached 25 mgKOH/g. After the reaction was completed, the product was adjusted to have a 33% by weight linseed oil viscosity of 20 Pa·s and then placed under a reduced pressure of 0.02 MPa for 10 minutes, so that rosin-modified phenolic resin B was obtained. Its physical properties are shown in Table 1.

### Example 3

To the same reaction vessel as in Example 1 were added 999 parts of communic acid-free gum rosin (manufactured by Guangxi Arakawa Chemical Industries Ltd.) and 3 parts of communic acid obtained by the method of Preparation Example 1 and melted by heating to 180°C with stirring under a nitrogen atmosphere. Subsequently, 30 parts of maleic anhydride was added to the vessel, and the reaction system was heated to 240°C, so that a component (a) was obtained. The content of communic acid in the component (a) was about 0.29% by weight. Subsequently, 714 parts (500 parts in solid content) of the resol-type butylphenol resin solution of Production Example 1 was added dropwise to the system over 6 hours. After the dropwise addition was completed, 93 parts of glycerin and 1.0 part of p-toluenesulfonic acid were added, and the mixture was allowed to react within the temperature range of 240 to 280°C until the acid value reached 25 mgKOH/g. After the reaction was completed, the product was adjusted to have a 33% by weight linseed oil viscosity of 20 Pa·s and then placed under a reduced pressure of 0.02 MPa for 10 minutes, so that rosin-modified phenolic resin C was obtained. Its physical properties are shown in Table 1.

### Example 4

To the same reaction vessel as in Example 1 were added 970 parts of communic acid-free gum rosin (manufactured by Guangxi Arakawa Chemical Industries Ltd.) and 30 parts of communic acid obtained by the method of Preparation Example 1 and melted by heating to 180°C with stirring under a nitrogen atmosphere. Subsequently, 30 parts of maleic anhydride was added to the vessel, and the reaction system was heated to 240°C, so that a component (a) was obtained. The content of communic acid in the component (a) was about 2.9% by weight. Subsequently, 714 parts (500 parts in solid content) of the resol-type butylphenol resin solution of Production Example 1 was added dropwise to the system over 6 hours. After the dropwise addition was completed, 31 parts of pentaerythritol, 65 parts of glycerin and 2.0 part of p-toluenesulfonic acid were added, and the mixture was allowed to react within the temperature range of 240 to 280°C until the acid value reached 25 mgKOH/g. After the reaction was completed, the product was adjusted to have a 33% by weight linseed oil viscosity of 20 Pa·s and then placed under a reduced pressure of 0.02 MPa for 10 minutes, so that rosin-modified phenolic resin D was obtained. Its physical properties are shown in Table 1.

### Example 5

To the same reaction vessel as in Example 1 were added 970 parts of communic acid-free gum rosin (manufactured by Guangxi Arakawa Chemical Industries Ltd.) and 30 parts of communic acid obtained by the method of Preparation Example 1 and melted by heating to 180°C with stirring under a nitrogen atmosphere. Subsequently, 30 parts of maleic anhydride was added to the vessel, and the reaction system was heated to 240°C, so that a component (a) was obtained. The content of communic acid in the component (a) was about 2.9% by weight. Subsequently, 714 parts (500 parts in solid content) of the resol-type butylphenol resin solution of Production Example 1 was added dropwise to the system over 6 hours. After the dropwise addition was completed, 52 parts of pentaerythritol, 46 parts of glycerin and 2.0 part of p-toluenesulfonic acid were added, and the mixture was allowed to react within the temperature range of 240 to 280°C until the acid value reached 25 mgKOH/g. After the reaction was completed, the product was adjusted to have a 33% by weight linseed oil viscosity of 20 Pa·s and then placed under a reduced pressure of 0.02 MPa for 10 minutes, so that rosin-modified phenolic resin E was obtained. Its physical properties are shown in Table 1.

### Example 6

To the same reaction vessel as in Example 1 were added 970 parts of communic acid-free gum rosin (manufactured by Guangxi Arakawa Chemical Industries Ltd.) and 30 parts of communic acid obtained by the method of Preparation Example 1 and melted by heating to 180°C with stirring under a nitrogen atmosphere. Subsequently, 20 parts of maleic anhydride was added to the vessel, and the reaction system was heated to 240°C, so that a component (a) was obtained. The content of communic acid in the component (a) was about 2.9% by weight. Subsequently, 714 parts (500 parts in solid content) of the resol-type butylphenol resin solution of Production Example 1 was added dropwise to the system over 6 hours. After the dropwise addition was completed, 93 parts of glycerin and 2.0 part of calcium hydroxide were added, and the mixture was allowed to react within the temperature range of 240 to 280°C until the acid value reached 25 mgKOH/g. After the reaction was completed, the product was adjusted to have a 33% by weight linseed oil viscosity of 20 Pa·s and then placed under a reduced pressure of 0.02 MPa for 10 minutes, so that rosin-modified phenolic resin F was obtained. Its physical properties are shown in Table 1.

### Example 7

To the same reaction vessel as in Example 1 were added 970 parts of communic acid-free gum rosin (manufactured by Guangxi Arakawa Chemical Industries Ltd.) and 30 parts of communic acid obtained by the method of Preparation Example 1 and melted by heating to 180°C with stirring under a nitrogen atmosphere. Subsequently, 30 parts of maleic anhydride was added to the vessel, and the reaction system was heated to 240°C, so that a component (a) was obtained. The content of communic acid in the component (a) was about 2. 9% by weight. Subsequently, 714 parts (500 parts in solid content) of the resol-type butylphenol resin solution of Production Example 1 was added dropwise to the system over 6 hours. After the dropwise addition was completed, 93 parts of glycerin and 2.0 part of calcium hydroxide were added, and the mixture was allowed to react within the temperature range of 240 to 280°C until the acid value reached 25 mgKOH/g. After the reaction was completed, the product was adjusted to have a 33% by weight linseed oil viscosity of 20 Pa·s and then placed under a reduced pressure of 0.02 MPa for 10 minutes, so that rosin-modified phenolic resin G was obtained. Its physical properties are shown in Table 1.

### Example 8

To the same reaction vessel as in Example 1 were added 970 parts of communic acid-free gum rosin (manufactured by Guangxi Arakawa Chemical Industries Ltd.) and 30 parts of communic acid obtained by the method of Preparation Example 1 and melted by heating to 180°C with stirring under a nitrogen atmosphere. Subsequently, the reaction system was heated to 240°C, so that a component (a) was obtained. The content of communic acid in the component (a) was about 2.9% by weight. Subsequently, 714 parts (500 parts in solid content) of the resol-type butylphenol resin solution of Production Example 1 was added dropwise to the system over 6 hours. After the dropwise addition was completed, 93 parts of glycerin and 1.0 part of p-toluenesulfonic acid were added, and the mixture was allowed to react within the temperature range of 240 to 280°C until the acid value reached 25 mgKOH/g. After the reaction was completed, the product was adjusted to have a 33% by weight linseed oil viscosity of 20 Pa·s and then placed under a reduced pressure of 0.02 MPa for 10 minutes, so that rosin-modified phenolic resin H was obtained. Its physical properties are shown in Table 1.

### Comparative Example 1

Rosin-modified phenolic resin (1) was prepared as in Example 1, except that 1,000 parts of communic acid-free gum rosin (manufactured by Guangxi Arakawa Chemical Industries Ltd.) was used instead and that communic acid obtained by the method of Preparation Example 1 was not added. Unfortunately, the melt viscosity increased sharply in the middle of the reaction, so that the stirring became difficult and an elastomeric product was finally obtained. An insoluble material was also produced in the resulting rosin-modified phenolic resin (1), and therefore, the resin (1) was not subjected to the ink preparation process described below.

### Comparative Example 2

Rosin-modified phenolic resin (2) was prepared as in Example 3, except that the amount of communic acid used, which was obtained by the method of Preparation Example 1, was changed from 3 parts to 0.5 parts. The content of communic acid in the component (a) was 0.05% by weight. The physical properties are shown in Table 1. As compared with the case of Example 3, the melt viscosity slightly increased in the middle of the reaction, and an increase in the torque of the stirrer was observed, although the stirring was possible.

### Comparative Example 3

Rosin-modified phenolic resin (3) was prepared as in Example 1, except that the amount of gum rosin used (manufactured by Sino Legend Chemical Co., Ltd., Wu Yi, Guangxi, China) containing 2.1% by weight of communic acid was changed from 950 parts to 930 parts and that the amount of communic acid used, which was obtained by the method of Preparation Example 1, was changed from 50 parts to 70 parts. The content of communic acid in the component (a) was about 8.5% by weight. The physical properties are shown in Table 1.

**[Table 1]**

| | Resin | Content (wt%) of communic acid in component (a) | Acid value (mgKOH/g) | Softening point (°C) | Weight average molecular weight |
|---|---|---|---|---|---|
| Example 1 | A | 6.7 | 15.9 | 181 | 119,000 |
| Example 2 | B | 2.9 | 16.5 | 184 | 152,000 |
| Example 3 | C | 0.29 | 17.0 | 190 | 208,000 |
| Example 4 | D | 2.9 | 18.2 | 180 | 298,000 |
| Example 5 | E | 2.9 | 20.4 | 182 | 309,000 |
| Example 6 | F | 2.9 | 19.3 | 178 | 44,000 |
| Example 7 | G | 2.9 | 19.8 | 181 | 50,000 |
| Example 8 | H | 2.9 | 14.7 | 180 | 10,2000 |
| Comparative Example 1 | (1) | 0 | Not measured due to production of insoluble matter in the resin | | |
| Comparative Example 2 | (2) | 0.05 | 17.6 | 192 | 241,000 |
| Comparative Example 3 | (3) | 8.5 | 14.1 | 178 | 98,000 |

### (Preparation of Varnish For Printing Ink)

An ink solvent composed of 31.0 parts of linseed oil and 31.0 parts of soybean oil was added to a reaction vessel, and then 38.0 parts of rosin-modified phenolic resin A was added to the reaction vessel and dissolved by mixing at 230°C for 30 minutes. The resulting solution was cooled down to 100°C. Subsequently, 0.5 parts of aluminum dipropoxide monoacetylacetate (Chelope EP-2 (trade name), manufactured by Hope Chemical Co., LTD) as a gelling agent was added thereto, and the mixture was heated up to 200°C and allowed to undergo gelation for 1 hour, so that a varnish (gel varnish) for printing ink was obtained. Gel varnishes were also prepared in the same manner using rosin-modified phenolic resins B, C, D, E, F, G, H, (2), and (3), respectively. The gel varnish obtained using rosin-modified phenolic resin E was elastomeric and slightly difficult to remove from the reaction vessel.

### Example 9

An ink solvent composed of 15.0 parts of linseed oil, 15.0 parts of soybean oil, and 28.0 parts of AF Solvent No. 6 (manufactured by Nippon Oil Corporation) was added to a reaction vessel, and then 42.0 parts of rosin-modified phenolic resin H was added to the reaction vessel and dissolved by mixing at 230°C for 30 minutes. The resulting solution was cooled to 100°C. Subsequently, 0.5 parts of the aluminum dipropoxide monoacetylacetate was added thereto, and the mixture was heated to 200°C and allowed to undergo gelation for 1 hour, so that a varnish (gel varnish) for printing ink was obtained.

### (Preparation of Printing Inks)

Each Printing ink was produced with each varnish for printing ink and the raw materials shown below by means of a three roll mill in such a manner that the amounts of the materials were so controlled that the tack value (measured with an inkometer at 30°C and 400 rpm) could be 8.5±0.5 and that the flow value (the diameter value measured with a spread meter at 25°C) could be 36.0±1.0.

Varnish for printing ink62 to 71 parts by weight
Phthalocyanine blue (cyan pigment) 18 parts by weight
Linseed oil 5.0 to 9.0 parts by weight
Soybean oil 5.0 to 9.0 parts by weight
Cobalt Drier 1.0 part by weight

### (Printing Ink Performance Tests)

The performance properties of each printing ink prepared by the above method were evaluated by the tests described below. The results are shown in Table 2.

### (Gloss)

Using an RI tester (manufactured by Ishikawajima Industrial Machinery Co., Ltd.), 0.4 ml of the ink was coated on an art paper sheet. Subsequently, the art paper sheet was subjected to humidity control at 23°C and 50%R.H. for 24 hours and then measured for the 60° to 60° reflectance of the ink film surface with a glossmeter (Gloss Meter VG2000 (product name) manufactured by Nippon Denshoku Industries Co., Ltd.). The higher value means the better gloss.

### (Misting Resistance)

After 2.6 ml of the ink was spread on an inkometer (manufactured by Toyo Seiki Seisaku-Sho, Ltd.), the rolls were rotated at a roll temperature of 30°C and 400 rpm for 1 minute and further rotated at 1,800 rpm for 2 minutes. In this process, the degree of scattering of the ink on a white paper sheet placed just under the roll was observed, whereby misting resistance was evaluated on a scale of 1 to 5. The higher value means the better misting resistance.

### (Drying Properties)

Using an RI tester (manufactured by Ishikawajima Industrial Machinery Co., Ltd.), 0.2 ml of the ink was coated on a parchment paper sheet, on which another parchment paper sheet was overlaid on the sheet on which the ink was spread, and the resulting laminate was set on the rotary drum of a C-type drying testing machine (manufactured by Toyo Seiki Seisaku-Sho, Ltd.). Subsequently, while a press gear wheel was contacted against the laminate, the drum was rotated, and the time period (hours) until the gear shape of the press gear wheel was no longer transferred to the overlaid sheet was measured. The lower value means the better drying properties.

### (Emulsification Resistance)

After 3.9 ml of the ink was spread on a dynamic emulsification tester (manufactured by Nippon Rheology Equipment Inc.), pure water was supplied thereto at a rate of 5 ml/minute and at a roll temperature of 30°C and 200 rpm, and the content of water in the spread ink was measured with an infrared moisture meter to determine the rate (%) of emulsification of the ink. The lower value means the higher emulsification resistance.

### (Fluidity)

In a room air-conditioned at 25°C, 1. 3 ml of the ink was placed on the upper end of a glass plate standing at an angle of 60° with the horizontal plane, and the distance that the ink flowed for 30 minutes was measured. The higher value means the better fluidity.

**[Table 2]**

| | Ink performance | | | | |
|---|---|---|---|---|---|
| | Gloss | Misting resistance | Drying properties (hours) | Emulsification resistance (%) | Fluidity (mm) |
| Example 1 | 70 | 5 | 6 | 27 | 129 |
| Example 2 | 71 | 5 | 6 | 25 | 124 |
| Example 3 | 73 | 5 | 7 | 24 | 112 |
| Example 4 | 70 | 5 | 5 | 24 | 118 |
| Example 5 | 69 | 5 | 5 | 23 | 112 |
| Example 6 | 73 | 4 | 7 | 26 | 143 |
| Example 7 | 73 | 5 | 6 | 27 | 141 |
| Example 8 | 73 | 4 | 7 | 21 | 133 |
| Example 9 | 70 | 5 | 3 | 27 | 149 |
| Comparative Example 2 | 73 | 3 | 8 | 24 | 94 |
| Comparative Example 3 | 66 | 5 | 6 | 30 | 135 |

## Claims

1. A rosin-modified phenolic resin, comprising a reaction product of (a) a rosin material containing 0.1 to 8% by weight of a communic acid-derived component, (b) a condensate of a phenolic compound and formaldehyde, and (c) a polyol.

2. The rosin-modified phenolic resin according to claim 1, wherein the component (a) is a combination of a communic acid-free rosin material and communic acid.

3. The rosin-modified phenolic resin according to any one of claims 1 or 2, wherein the component (a) contains α,β-unsaturated carboxylic acid-modified rosin.

4. The rosin-modified phenolic resin according to any one of claims 1 to 3, wherein based on 100% by weight of the total of the components (a), (b), and (c) used, the amount of the component (a) used is from 41 to 88% by weight, the amount of the component (b) used is from 9 to 50% by weight, and the amount of the component (c) used is from 3 to 9% by weight.

5. The rosin-modified phenolic resin according to any one of claims 1 to 4, which has a weight average molecular weight of 50,000 to 300,000.

6. A method for producing a rosin-modified phenolic resin, comprising allowing (a) a rosin material containing 0.1 to 8% by weight of a communic acid-derived component, (b) a condensate of a phenolic compound and formaldehyde, and (c) a polyol to react together.

7. The method according to claim 6, wherein the component (a) is a combination of a communic acid-free rosin a material and communic acid.

8. The method according to any one of claims 6 or 7, wherein the component (a) contains α,β-unsaturated carboxylic acid-modified rosin

9. The method according to any one of claims 6 to 8, wherein the rosin-modified phenolic resin has a weight average molecular weight of 50,000 to 300,000.

10. The method according to any one of claims 6 to 9, wherein based on 100% by weight of the total of the components (a), (b), and (c) used, the amount of the component (a) used is from 41 to 88% by weight, the amount of the component (b) used is from 9 to 50% by weight, and the amount of the component (c) used is from 3 to 9% by weight.

11. A varnish for printing ink, comprising;
the rosin-modified phenolic resin according to any one of claims 1 to 5; and
a vegetable oil and/or a petroleum solvent.

12. A varnish for printing ink, comprising;
the rosin-modified phenolic resin obtained by the method according to any one of claims 6 to 10; and
a vegetable oil and/or a petroleum solvent.

13. A printing ink, comprising the varnish for printing ink according to claim 11 or 12.
